# EUROPEAN PATENT APPLICATION

(11) **EP 4 190 727 A1**
(43) Date of publication of application: **07.06.2023**
(21) Application number: 22211070.2
(22) Date of filing: 02.12.2022
(51) Int. Cl.: B65G 47/71, B65G 47/84, B65B 29/02

(54) **DEVICE FOR MOVING CONTAINERS**

(30) Priority: 02.12.2021 IT 202100030596
(71) Applicant: SARG S.r.l., 20021 Bollate (MI) (IT)
(72) Inventor: LOMBARDO, Gaspare, 20092 Cinisello Balsamo (MI) (IT)
(74) Representative: Marietti, Giuseppe

(57) **Abstract**

Device (1) for moving containers (100), comprising: a first movement element (2) configured such as to move the containers (100); a distributing drum (3) adapted to receive at least one row of objects (100) and to deliver the objects (100) of the same row in separate rows; wherein said distributing drum (3) is rotatable around a rotation axis (A) and is configured such as the entry of said containers (100) into said distributing drum (3) along a row is carried out along a first forward direction (D1) substantially axial to the distributing drum (3) with respect to said rotation axis (A), and the delivery of the containers (100) initially arranged along the same row is carried out along several rows separated from one another, along a second forward direction (D2) arranged substantially orthogonal to said first forward direction (D1).

## Description

The present invention concerns the field of transportation, typically for the respective filling of containers, in particular for containers such as coffee capsules and similar elements.

Systems for moving containers and which typically comprise an orientator adapted to randomly receive objects and to orient them in a predefined way, such as to move them towards a successive station, for example by means of air channels or moving carpets or belts, are known.

The orientator is typically configured such as to deliver a single row of objects. The successive station, for example a station for filling coffee capsules, is configured such as to receive a plurality of rows of containers.

Solutions which provide for the passage from one to more rows, for examples by means of movable arms or distribution pushers, are known.

Such solutions are complex, costly and not always effective, or at least not always flexible in quickly and rapidly directing objects towards the desired rows.

Object of the present invention is thus to solve the problems discussed above. Further object of the present invention is that of providing a system for transporting containers which allows to simply and effectively distribute the same row of objects along several parallel rows.

Further object of the present invention is to make such transport system in a compact way.

Further object of the present invention is to make a device which can selectively distribute the objects towards the desired rows.

These and further objects are solved by the present invention by means of a device according to one or more of the accompanying claims.

In particular, an aspect of the present invention concerns a device for moving containers comprising: a first movement element configured such as to move the containers; a distributing drum adapted to receive at least one row of objects and to deliver the objects of the same row in separate rows. The distributing drum is rotatable around a rotation axis and is configured such as the entry of the containers into the distributing drum along a row occurs along a first forward direction being substantially axial to the distributing drum with respect to the respective rotation axis, and the coming out of the containers, along several rows separated by the distributing drum, occurs in a substantially perpendicular direction with respect to the first forward direction.

The distributing drum is a compact element which allows to effectively transform the same row of containers into a plurality of different rows of containers. In particular, the drum can typically accommodate a predetermined number of containers. Following its rotation, they are delivered to the successive element along several parallel rows.

The drum can successively receive further containers which will in turn be delivered along several separate rows as the drum rotates.

According to a possible aspect, the device comprises a separating element arranged downstream of the drum and adapted to modify the distance between the containers coming out of the drum. In particular, the separating element is adapted to modify the transversal distance between the containers, i.e. the distance measured in axial direction with respect to the rotation axis of the drum (and thus perpendicular to the second forward direction of the containers exiting the drum itself).

Thanks to this, it is possible to prearrange the containers such as they can be handled more easily by the elements placed downstream of the separating element, which fulfill the desired needs and configurations.

According to a possible aspect, the separating element comprises a plurality of channels and at least part of the channels are not parallel to one another. This way, the transversal distance between the containers is modified when the containers move forward along such channels.

According to a possible aspect, the drum comprises a plurality of sectors arranged in series along the rotation axis and each sector is able to accommodate one or more containers, preferably a single container. Typically, each sector has a seat for one or more containers, preferably a seat for a single container.

In possible embodiments of more simple construction, the sectors are integral to one another when rotating. In other words, when the drum rotates, all the respective sectors rotate synchronously with each another.

Alternative solutions, on the one hand more complex but which allow greater flexibility of use, instead provide that at least part of the sectors are rotatable independently of one another with respect to the rotation axis of the drum. It is thus for example possible to rotate some sectors of the drum, while instead keeping the different sectors of the drum itself stationary or rotating at different speeds. This way, it is possible to deliver the containers only to some rows, or anyhow only part of the containers arranged in the drum. This way, it is possible to organize the containers in different rows at will. For example, it is possible to make a drum having six sectors, such as to be able to deliver the containers in six different rows. For example, in the event of a possible failure in a machine operating on the sixth row, it is possible to move only the first five sectors such as to form only five rows, thus avoiding to direct the containers at the row placed at the malfunction. According to a possible aspect, the drum is rotated by a shaft and at least part of the sectors are selectively constrainable to, and releasable from, such rotation shaft, such as to be able to select which sectors to rotate.

According to a possible aspect, the device comprises at least one sensor arranged at the drum and adapted to detect the presence of the containers at the drum. According to a possible aspect, the device comprises a second movement element arranged downstream of the drum and adapted to receive a plurality of rows of containers from the drum.

An aspect of the present invention further concerns a process for moving containers by means of a device according to one or more of the preceding claims, comprising the steps of: moving the containers along the first movement element; delivering at least one row of containers to the distributing drum along a first forward direction axial with respect to the distributing drum; rotating the distributing drum; delivering from the drum, in a plurality of rows, the containers initially arranged along the same row, along a second forward direction substantially perpendicular to the first forward direction.

Preferably, the method further comprises the step of separating the containers from one another, i.e. of increasing the transversal distance between them by means of a separating element.

With reference to the accompanying figures, embodiments of the present invention are now described by way of example and without limitations, in which:

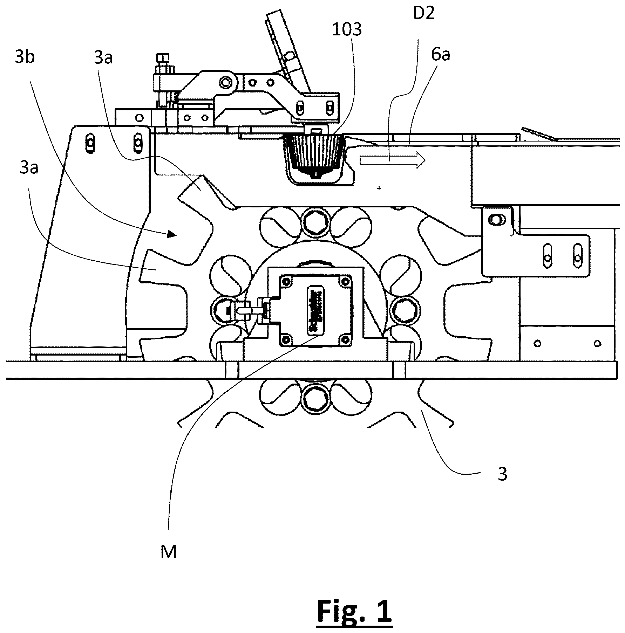

- figure 1 is a side view of an apparatus according to a possible embodiment of the present invention;

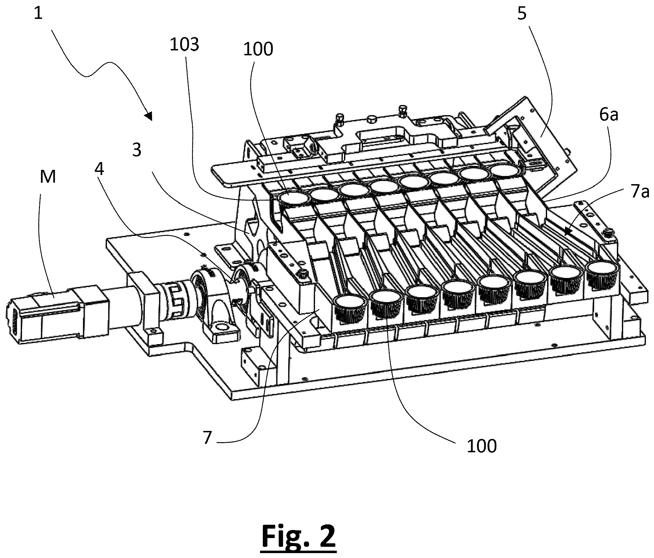

- figure 2 is a perspective view of the apparatus of figure 1, in which some elements were omitted for ease of view;

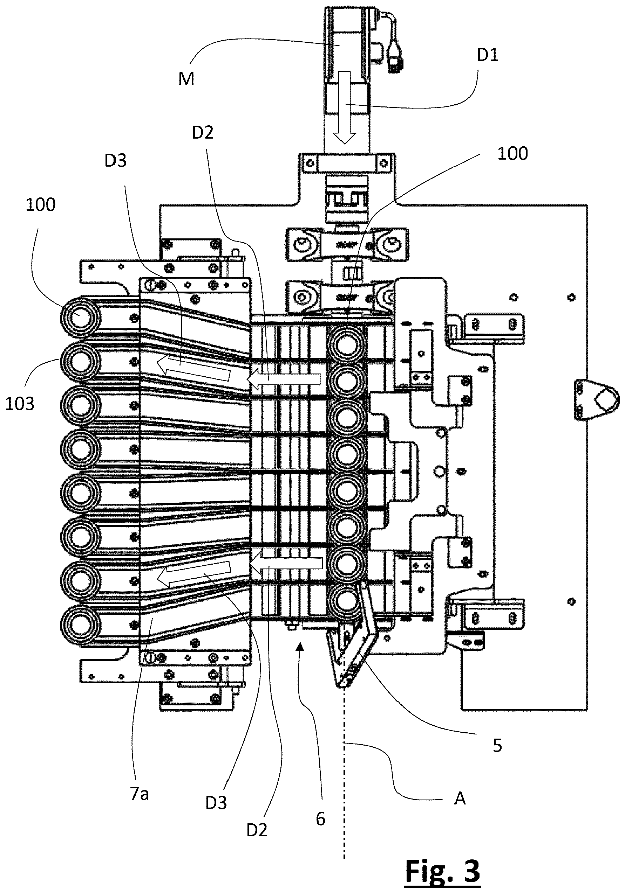

- figure 3 is a plan view of the apparatus of figure 1;

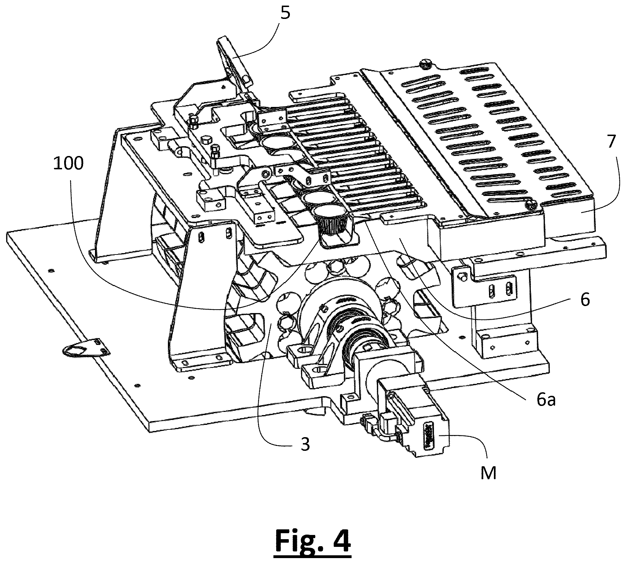

- figure 4 is a further perspective view of the apparatus of figure 1;
- figures 5A - 5C are schematic views of the operating method of a device according to a possible embodiment of the present invention;
- figure 5D is a schematic view of the operating method of a device according to an embodiment alternative to that of figures 5A - 5C;
- figures 6A - 6B are further schematic views of a device according to an embodiment alternative to that of figures 5A - 5C.

A device 1 for moving containers 100 comprises a first movement element 2 adapted to move containers along at least one row towards a distributing drum 3. Typically, the first movement element precisely comprises one row of containers 100. The possibility to have a greater number of rows is not however excluded, typically if the drum 3 has large dimensions, such as to be able to receive more rows parallel to one another. In particular, feeding several rows would be advantageous if the radius of the drum section would be particularly large and thus the curvature of the drum section small, such as to be able to have several rows of seats, substantially at the same height, in the drum. As better described hereunder, the effect of the drum would anyhow stay unvaried, i.e. that of distributing the containers that were initially arranged in the same row along several rows.

The containers 100 can have different shapes. Preferably, they have a closed body on the bottom and typically have on opening on top. Typically, the opening has a flange, although embodiments adapted to cooperate with containers 100 not provided with flanges are possible. A preferred container 100 used with the present device 1 is a coffee capsule or a container having similar shape.

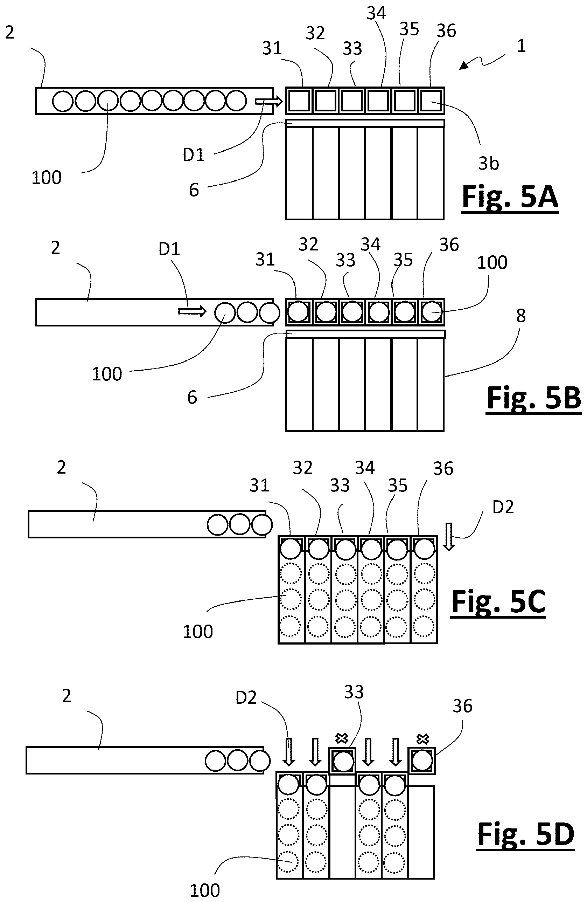

The first movement element 2, shown only schematically in figures 5A - 5D, is known in the art and not discussed in detail herein. Typically, it is shaped like a conveyor belt, or an air channel, or a belt, etc.

In a known way, the first movement element 2 typically receives the containers 100 from a source.

According to a possible aspect, the device 1 can comprise an orientator element known in the art and not shown in detail in the figures and configured to arrange the containers 100 according to a predefined orientation inside the first movement element 2, typically with the cavity facing upward.

As discussed, a distributing drum 3, henceforth also "drum 3," is present downstream of the first movement element 2.

The drum 3 is rotatable around a rotation axis A.

Such rotation can occur by means of different methods known to the technician of the field.

Preferably, the device has an electric motor M adapted to control a rotating shaft 4 on which the drum 3 is mounted. The rotating shaft 4 can be controlled directly by the motor M or gears can act as reducers and are interposed between the shaft 4 and the motor M.

The device 1 is configured such as the first movement element 2 feeds the containers 100 arranged along at least one row, along a first forward direction D1 axial with respect to the rotation axis A, i.e. parallel thereto and arranged at a distance from the rotation axis A.

In other words, axial does not mean that it coincides with the rotation axis A but that it is substantially parallel thereto, such as, when considering a plane orthogonal to the rotation axis A, such plane is substantially orthogonal also to the first forward direction D 1.

According to a preferred aspect, the drum 3 is provided with a plurality of radial teeth 3a. The space between successive teeth 3a (i.e. radially arranged in succession on the drum 3) forms seats 3b into which the containers 100 can be at least partially inserted.

As discussed, the containers 100 are preferably provided with a flange 103 arranged at the upper portion thereof. The teeth 3a are typically arranged such as to be able to support the flange of the containers 100. Thus, the distance between two teeth 3a arranged successively in radial direction on the drum 3 is preferably less than the diameter (or the greatest dimension) of the flange of the container 100, such as, as discussed, the containers 100 can be supported by the respective flange within the seat 3b.

Embodiments wherein the containers can be leaned into the respective seats are anyhow possible. In such case, the device is typically shaped such as to support the containers 100 on the bottom and such as to cooperate with a different portion of the container 100, typically with its body, such as to allow it to be pull out of the seat 3b. Generally, the drum has a plurality of sectors 31 - 36 arranged in succession along the rotation axis A of the drum 3. Each sector is provided with a seat 3b adapted to accommodate one or more containers, each seat 3b is preferably configured to accommodate a single container 100.

The number of sectors 31 - 36 can obviously vary in different embodiments and typically corresponds to the maximum number of rows along which the containers 100 coming out of the drum 3 can be organized.

The seats 3b are typically arranged so that a container 100, when moving forward along the first forward direction D1, can cross the various seats 3b of the drum 3 arranged in axial succession (with respect to the rotation axis A), until reaching the furthest seat along the forward direction D1 and which seat is still not stably occupied by a container 100.

The device 1 is thus preferably configured so that the containers 100 can move forward along the seats 3b of the drum until all seats 3b are stably occupied by a container 100. A container 100 stably occupies a seat 3b when it cannot move forward along the forward direction D1, since a blocking element (for example a wall of the device) is immediately present downstream of the seat 3b or a further seat 3b is present and in which a different container 100, which cannot in turn move forward along the forward direction D1, since it is in turn blocked in its travel by a blocking element or by a further container 100 in the successive seat 3b, is present.

The device 1 preferably comprises a sensor 5 known in the art and adapted to detect the filling of all seats 3b by means of the containers. It is possible to provide a plurality of sensors 5 (for example one for each seat), or a single sensor 5 adapted, for example, to detect the presence of a container 100 in the last seat 3b, i.e. the last seat 3b the containers 100 encounter during their travel along the first forward direction D1. Additionally or alternatively, it is possible to provide the device 1 with a sensor, for example a photocell, adapted to allow to count the containers 100 entering the drum 3.

In fact, typically, the containers 100 are fed into the drum 3 continuously, thus, if a container reaches the last seat 3b, the preceding seats are also occupied by containers.

According to different embodiments, the sectors 31 - 36 of the drum 3 can be integral to one another when rotating, or at least part of the sectors 31 - 36 can rotate independently of the other sectors of the drum 3.

According to the first solution schematized in figures 5A - 5C, all the sectors 31-36 rotate synchronously, typically by means of the action of the shaft 4.

This way, all the containers 100 present in the seats 3b are delivered from the drum 3.

According to an alternative solution schematized for example in figure 5D, the sectors 31 - 36 can be rotated around the rotation axis A independently of one another.

This way, it is possible to select which containers to deliver from the drum 3. Typically, the containers arranged at a row that does not need to be filled at that time, for example because the machine arranged in series at the device 1 is not able to handle the containers 100 arranged at such row, are kept in the drum 3.

It should be noted how such second solution can anyhow allow the synchronous rotation of all sectors and is thus able, if needed, to deliver all the containers 100 that were fed to the drum 3.

There are different possible methods of making an independent rotation between the various sectors 31 - 36 of the drum. A possible solution provides, for example, the use of mechanisms adapted to selectively constrain and release each sector 31 - 36 from the shaft 4.

Generally, the rotation of the drum 3 allows to move the containers 100 and, in particular, to deliver such containers 100 along a second forward direction D2 substantially orthogonal to the rotation axis A, and thus to the first forward direction D1.

It should be noted how the drum 3 is typically provided with an ejecting element 6 for ejecting the containers 100 from the drum 3 and in particular from the respective seats 3b. The interaction between such ejecting element 6 and the containers 100 helps determine the second forward direction D2.

Preferably, the second forward direction D2 is substantially orthogonal to the first forward direction D1, at least until the ejecting element 6 cooperates with the containers 100.

A preferred method of determining the relationship between the first forward direction D1 and the second forward direction D2 is that of considering a plan view of the device 1 in use, i.e. a substantially horizontal plane arranged above the device 1 during use. By orthogonally projecting the first forward direction D1 and the second forward direction D2, it is possible to assess how such projections are substantially orthogonal to one another, thus preferably forming a 90° angle with a tolerance of less than 20°, preferably of less than 10°.

This way, the containers 100 present in the drum 3 are moved at a rotation thereof along a circular path having the rotation axis A as the center, since they rotate integrally with a portion of the drum r placed at a distance from the rotation axis A itself. Successively, they are delivered from the drum 3 along the second forward direction D2.

It should be noted how the rotation integral with the drum 3 can occur for a very limited angle, since it is possible that the containers are delivered by the container immediately after the movement thereof.

Preferably, the delivery of the containers starts with the interaction between the containers 100 and the ejecting element 6.

The movement of the containers 100 on the drum 3 is thus typically tangential to the rotation axis A until the intervention of the ejecting element 6, thanks to which ejecting element the containers are moved along the second forward direction D2, as discussed above.

According to a possible aspect, the ejecting element comprises a plurality of guides 6a adapted to come into contact with a portion of the containers 100, typically with the flange of the containers 100 when they are moved by the drum 3. During the delivery of the containers 100 from the drum 3, the containers can thus move forward along the guides pushed by the drum 3, preferably by the teeth 3a of the drum 3. According to a possible aspect, the device 1 comprises a separating element 7 adapted to modify and, in particular, increase the distance between the containers 100 measured in a direction axial to the rotation axis A, i.e. a direction parallel to such axis A.

In other words, at the separating element 7, the containers 100 preferably move forward along third forward directions D3. At least part of such directions are divergent from one another, preferably considering the orthogonal projection of such third forward directions on the previously described horizontal plane.

According to a preferred aspect, such separating element 7 comprises a plurality of channels 7a. At least part of the channels 7a are arranged branching off from one another, such as to increase the transversal distance between the containers 100, i.e. the distance measured parallel to the rotation axis A of the drum 3.

According to a possible aspect, the device 1 has a second movement element 8 adapted to move/transport the containers 100 downstream of the drum 3, typically downstream of the separating element 7.

Such second movement element 8 typically comprises a plurality of channels along which the containers can slide. Different movement elements, such as belt, air conveyed, etc., known in the art can be used as a second movement element.

Such second movement element 8, shown only schematically in figures 5A - 5D, is configured such as to allow the forward movement of a plurality of containers along several rows, typically parallel to one another.

Alternative embodiments do not provide for the use of such second movement element 8, for example allowing the containers 100 to be picked up directly downstream of the drum 3 or anyhow downstream of the separating element 7.

In use, the device 1 feeds, by means of the first movement element 2, a plurality of containers 100 arranged along at least one row, to the drum 3, typically precisely along a single row, by moving them along the first forward direction D1.

A number N of containers 100 thus fills the drum 3.

When the drum 3 has reached the desired capacity of containers 100, thus when the drum 3 accommodates N containers arranged along a row, the drum 3 is rotated. When the drum 3 moves, the containers 100 are moved and delivered from the drum along the second forward direction D2, substantially orthogonally to the first forward direction D1.

According to a possible solution, all the sectors 31 - 36 of the drum 3 move forward synchronously, such as to deliver all N containers along N rows.

The drum 3 thus receives N containers 100 along a row and the movement of the drum itself creates N rows of containers, each initially containing a single container 100. Repeating the operations of the drum 100 leads to filling the N rows of containers downstream of the drum 3 with a plurality of containers for each row. In particular, after M filling and delivering cycles of the drum 3, the device forms N rows of containers 100 each provided with M containers 100, as schematized for example in figures 5A - 5C.

In such figures it is possible to observe how N is equal to 6. The drum thus receives 6 containers and after a number of 4 cycles for example (i.e. M = 4), the device 1 is able to form 6 rows, each comprising 4 containers, starting from a condition in which the 24 containers were instead initially aligned along a single row. In particular, in figure 5C, the containers delivered in the preceding cycles are shown dotted.

In possible alternative solutions, in particular in those provided with sectors rotatable independently of one another, it is possible to fill the drum with N containers 100. During the movement of the drum only part of the sectors is moved, thus X sectors are not rotated and do not thus deliver the respective containers. In such case, N - X rows of containers are formed. After M filling and delivery cycles, N - X rows of containers are formed, each containing M containers.

A similar solution is for example depicted in figure 5D, in which it is possible to recognize how N is equal to 6, X is equal to 2 and M is equal to 4.

In a possible alternative solution, it is possible to distribute the containers among the rows in a different way. In other words, embodiments, in which each sector is always operated such as to deliver the respective container or is always operated such as to not deliver the respective container, are described.

However, it is possible to control the device 1 so as to vary the behavior of each single sector 31 - 36 of the drum 6 over time.

For example, with reference to the embodiments of figures 5A - 5D, it is for example possible to operate 3 cycles in which all 6 sectors deliver the respective container 100 (as in figure 5C) and 2 cycles in which only 4 sectors deliver the respective containers (as in figure 5D). In such case, the device 1 forms 6 rows of containers exiting the drum 3, 4 of which have 5 containers, while the remaining 2 contain 3 containers.

It should be noted how the description set forth herein makes it evident to the skilled person the use of the device when several rows of containers are fed to the drum contemporaneously.

In particular, in the event of several feed rows, each row delivers N containers to the drum 3. Following the rotation of the drum, N rows of containers are formed, each of the N rows exiting the drum containing a number of containers equal to the number of rows entering in the drum.

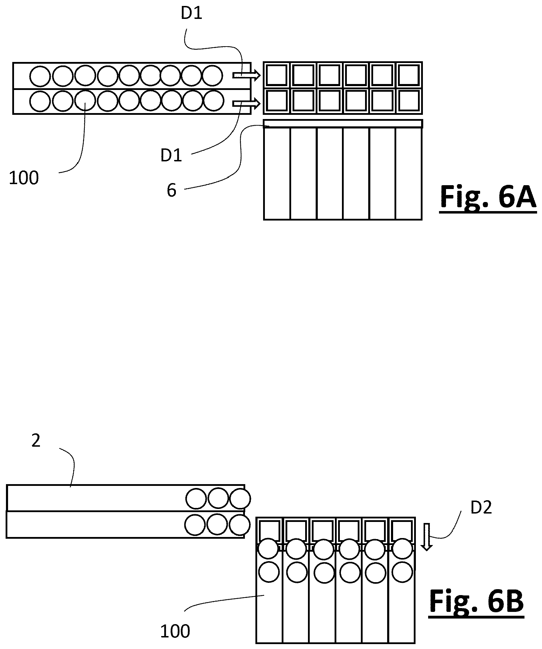

For example, as schematized in figures 6A - 6B, the device could be configured to feed two rows of containers to the drum 3 and, in particular, six containers from each of the two rows. Following the rotation of the drum 3, six rows of containers are formed at the exit, each row containing two containers. By repeating the operations of the drum, it is possible to fill the rows coming out of the drum 3 over time.

## Claims

1. Device (1) for moving containers (100), comprising:
• a first movement element (2) configured such as to move at least one row of containers (100);
• a distributing drum (3) adapted to receive at least one row of objects (100) and to deliver the objects (100) of a same row in separate rows;
wherein said distributing drum (3) is rotatable around a rotation axis (A) and is configured such as the entry of said containers (100) into said distributing drum (3) along the same row is carried out along a first forward direction (D1) substantially axial to the distributing drum (3) with respect to said rotation axis (A), and the delivery of the containers (100) initially arranged along the same row is carried out along several rows separated from one another along a second forward direction (D2) arranged substantially orthogonal to said first forward direction (D1).

2. Device (1) according to claim 1, comprising a separating element (7) arranged downstream of said distributing drum (3) and adapted to modify the distance between said containers (100) downstream of said distributing drum (3), said distance being measured in a direction axial to the rotation axis of the distributing drum (3).

3. Device (1) according to claim 2, wherein said separating element (7) comprises a plurality of channels (7a), at least part of said channels (7a) not being parallel to one another.

4. Device (1) according to one of the preceding claims, wherein said distributing drum (3) comprises a plurality of sectors (31 - 36) arranged in series along said rotation axis (A), each sector (31 - 36) being able to accommodate one or more containers (100), preferably a single container (100).

5. Device (1) according to claim 4, wherein said sectors (31 - 36) are integral to one another when rotating.

6. Device according to claim 4, wherein at least part of said sectors (31 - 36) is rotatable independently of one another with respect to said rotation axis (A).

7. Device (1) according to claim 6, wherein said distributing drum (3) is rotated by a shaft (4), at least part of said sectors (31 - 36) being selectively constrainable to, and releasable from, said shaft (4).

8. Device (1) according to one of the preceding claims, comprising a sensor (5) arranged at said distributing drum (3) and adapted to detect the presence of the containers (100) at the distributing drum (3).

9. Device (1) according to one of the preceding claims, comprising a second movement element (8) arranged downstream of said distributing drum (3) and adapted to receive a plurality of rows of containers (100) from said distributing drum (3).

10. Process for moving containers (100) by means of a device (1) according to one or more of the preceding claims, comprising the steps of:
i. moving the containers (100) along a first movement element (2);
ii. delivering at least one row of containers (100) to said distributing drum (3) along a first forward direction (D1) axial with respect to the distributing drum (3);
iii. rotating said distributing drum
iv. delivering from said drum, in a plurality of rows, said containers initially arranged along the same row, along a second forward direction (D2) substantially perpendicular to the first forward direction (D1).
